# FASCICULE DE BREVET EUROPEEN

(11) **EP 0 949 510 B1**
(45) Date de publication et mention de la délivrance du brevet: **11.06.2003**
(21) Numéro de dépôt: 99400821.7
(22) Date de dépôt: 02.04.1999
(51) Int. Cl.: G01P 3/44

(54) **Joint dynamique de type "cassette" à dispositif de repérage angulaire; procédé pour sa mise en oeuvre**
Dynamische Dichtung des Typs "Kassette" mit Winkelmessvorrichtung; Verfahren zu ihrer Anwendung
"Cassette" type dynamic seal with angular detection device; method of using the same

(30) Priorité: 07.04.1998 FR 9804294
(43) Date de publication de la demande: 13.10.1999
(73) Titulaire: HUTCHINSON, 75008 Paris (FR)
(72) Inventeur: Fayaud, Patrick, 49000 Angers (FR)
(74) Mandataire: Burbaud, Eric

(56) Documents cités:
- EP-A- 0 395 783
- EP-A- 0 553 716
- EP-A- 0 594 550
- EP-A- 0 652 438
- DE-A- 4 212 973
- FR-A- 2 574 501

## Description

La présente invention concerne un dispositif de codage angulaire destiné, par exemple, à repérer le point mort haut (PMH) d'un vilebrequin de moteur à combustion interne, ce qui est'utile pour l'optimisation de son fonctionnement.

Des dispositifs de repérage connus comprennent une roue dentée entraînée avec le plateau de réaction de l'embrayage et présentant une singularité, par exemple sous la forme d'une dent plus longue ou d'une encoche plus large. Un capteur, par exemple inductif, repère cette singularité et, après un certain nombre de "fronts montants", émet un signal de commande correspondant au PMH ; cela permet de capter la vitesse de rotation moyenne du moteur, dont dépend le niveau des courants des signaux détectés (DE 42 12973).

L'inconvénient de cette technique connue réside essentiellement dans la nécessité de réaliser un indexage mécanique au montage pour créer une référence : la singularité de la roue dentée doit être positionnée très précisément par rapport au point mort haut du vilebrequin.

Les dispositifs à roue phonique et capteur inductif présentent le même type d'inconvénient.

Le but de la présente invention est de remédier à ces inconvénients, et de mettre à profit la présence d'un joint dynamique de type "cassette" sur l'arbre du vilebrequin pour constituer un dispositif de repérage angulaire de ce vilebrequin, un tel joint dynamique de type "cassette" étant connu par le document FR 2 574 501.

A cet effet, un joint dynamique de type "cassette" conforme à la présente invention, du type comportant un manchon à collerette annulaire propre à être calé en rotation sur un arbre tournant, et un support de joint annulaire entourant ledit manchon, ce joint comportant une lèvre d'étanchéité circulaire en appui étanche sur la surface extérieure dudit manchon, ce support pouvant être ajusté de façon étanche dans un logement approprié d'une partie fixe, de sorte que ledit joint dynamique assure l'étanchéité entre ladite partie fixe et ledit arbre tournant, est caractérisé en ce que ladite collerette annulaire est recouverte d'une couche d'un revêtement en matière magnétisable portant au moins une piste sur laquelle est inscrite une série de repères polarisés alternativement en direction périphérique, cette piste comportant au moins un repère singulier, et ledit support de joint portant en regard de ladite piste au moins un détecteur de champ magnétique, et en ce que ce détecteur est relié à un module électronique de traitement du signal du détecteur, et de mémorisation du déphasage angulaire entre ledit repère singulier et une position de référence souhaitée de l'arbre.

Grâce à un tel joint, il ne sera plus nécessaire de procéder, lors du montage, à un indexage mécanique pour créer une référence. Le joint pourra être monté sur l'arbre dans une position angulaire quelconque, et il suffira, en faisant faire quelques tours de rotation au moteur (au démarreur) de repérer l'écart angulaire (α) entre le "repère singulier" et le PMH du vilebrequin, et de le mémoriser une fois pour toutes, pour connaître ensuite, par comparaison, la position de ce PMH au cours du fonctionnement normal du moteur.

En outre, on s'affranchit totalement des phénomènes vibratoires du moteur, car les variations de l'entrefer (espace entre le détecteur de champ magnétique et le revêtement de la collerette) n'auront aucune influence sur le comptage des impulsions engendrées par les repères polarisés de ce revêtement.

Enfin, on pourra conserver les performances d'un joint dynamique dans le même encombrement qu'un joint standard, avec la même souplesse de montage par le choix de la technologie active magnétique et par l'électronique d'auto-indexation par mémorisation qui viennent d'être décrites.

Avantageusement, ladite série de repères polarisés alternativement comporte des secteurs équiangulaires polarisés alternativement nord et sud sur toute la périphérie de ladite piste, à l'exception d'un secteur neutre constituant ledit repère singulier.

Il sera encore avantageux de prévoir que ledit revêtement en matière magnétisable est de l'élastoferrite et que ledit détecteur de champ magnétique est constitué par une sonde à effet Hall ou une magnétorésistance.

L'invention concerne encore un procédé de mise en oeuvre d'un joint conforme à ce qui précède, caractérisé en ce que l'on monte ledit joint dans une position angulaire quelconque sur ledit arbre, on amène l'arbre dans la position angulaire de référence souhaitée, on branche le détecteur de champ magnétique sur son alimentation, ce qui fournit un signal de référence angulaire, on fait tourner l'arbre, et enfin on repère et l'on met en mémoire le déphasage angulaire entre ledit repère singulier et ladite position de référence souhaitée de l'arbre.

Un mode d'exécution de l'invention va maintenant être décrit à titre d'exemple nullement limitatif avec référence aux figures du dessin ci-annexé dans lequel :
- la figure 1 est une demi-vue en coupe axiale d'un joint dynamique de type "cassette" conforme à l'invention ;
- la figure 2 est une vue de face schématique montrant la piste magnétisée du revêtement de la collerette; et
- la figure 3 montre le diagramme des signaux impulsionnels issus du détecteur de champ magnétique (tension de Hall V = f(t)) avec le signal mémorisé de repérage du PMH d'un moteur à combustion interne.

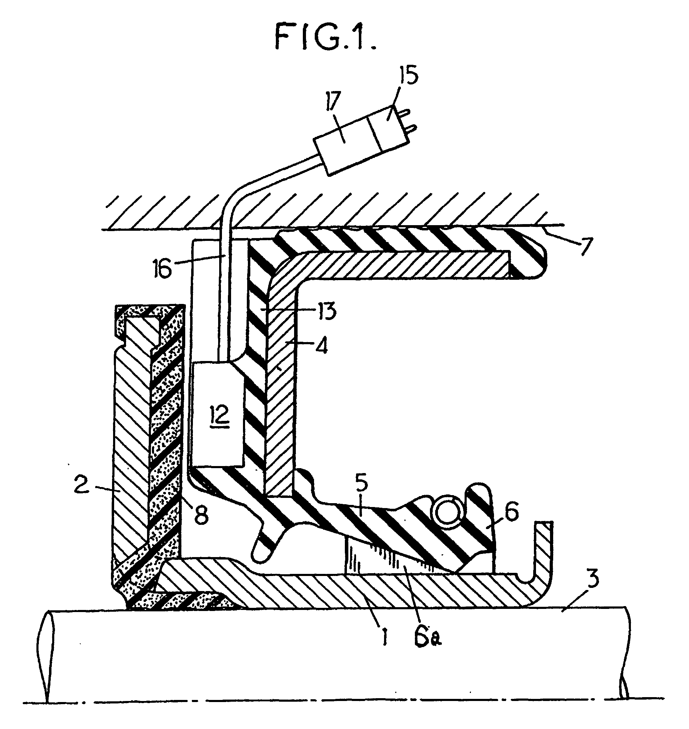

Sur la figure 1, le joint dynamique de type "cassette" comporte un manchon 1 à collerette annulaire 2, propre à être calé en rotation sur un arbre tournant 3, par exemple de vilebrequin de moteur à combustion interne, et un support 4 de joint annulaire 5 en élastomère à lèvre d'étanchéité circulaire 6 (la référence 6a désigne des tries de contre-pression assurant une meilleure étanchéité). La matière élastomère 13 du joint recouvre toute la surface du support 4, de sorte à assurer une fixation étanche dans le logement correspondant de la partie fixe 7.

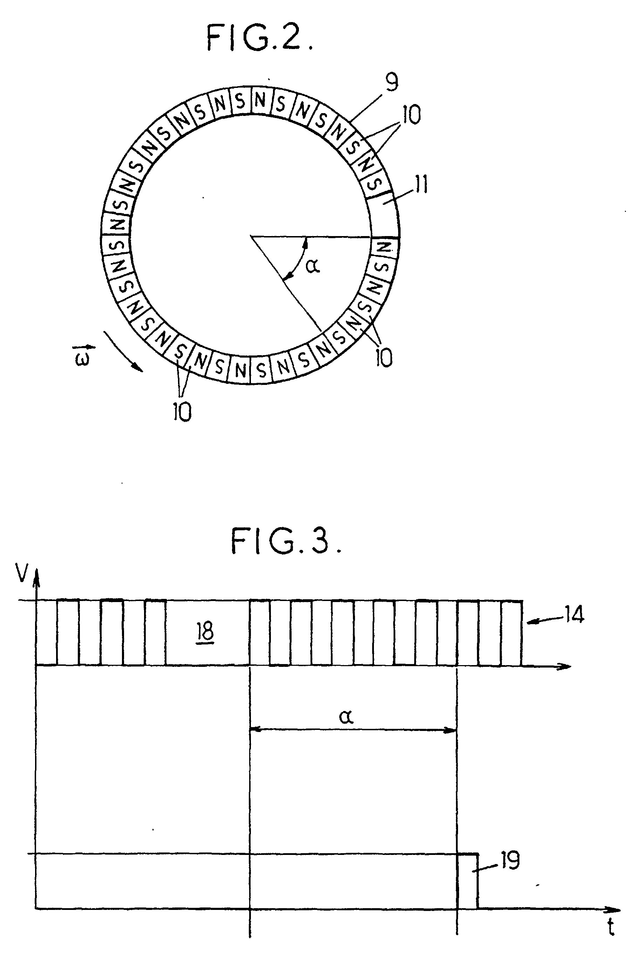

Ces dispositions étant connues, l'invention concerne plus précisément le fait que la collerette annulaire 2 est recouverte d'une couche d'un revêtement 8 en matière magnétique (élastoferrite) portant une piste circulaire 9 (figure 2) sur laquelle est inscrite une série de secteurs équiangulaires polarisés alternativement nord et sud, référencés 10, avec une interruption au niveau d'un secteur 11 constituant un repère singulier parmi les repères 10. Ceci constitue un codage adapté à la notion de positionnement angulaire absolu.

Au moins un détecteur de champ magnétique, avantageusement une sonde à effet Hall (ou une magnétorésistance) 12, est surmoulé dans la matière élastomère 13 du support 4, vis-à-vis de la pisté 9, et transmet un train d'impulsions 14 (figure 3) sur un connecteur extérieur 15 qui peut être branché sur le bloc d'alimentation en courant du moteur et qui est relié à la sonde de Hall 12 par un câble 16, la référence 17 désignant un module électronique intégré au connecteur 15. Le rôle de ce module est d'assurer le traitement du signal 14, la gestion de la notion d'absolu et l'auto-indexage.

La particularité innovante du joint dynamique de type "cassette" ainsi décrit est d'intégrer la technologie magnétique active, permettant une auto-indexation par mémorisation, quelle que soit la position de montage du joint à cassette sur l'arbre 3, de positions angulaires particulières, ou de connaître à tout instant la position angulaire de la partie tournante de l'organe utilisateur (vilebrequin) en plus du captage d'une vitesse de rotation (simplement incrémentale).

Ainsi, le joint étant monté sur l'arbre 3 dans une position angulaire quelconque du secteur singulier 11 (correspondant à l'espace libre 18 dans le train d'impulsions 14), il suffira de faire effectuer quelques tours au moteur pour repérer l'impulsion 19 correspondant au point mort haut (PMH) du moteur, et de mémoriser dans le module 17 son décalage angulaire α avec le repère singulier 11, pour obtenir ensuite un repérage précis de ce PMH en cours de fonctionnement normal, ceci quelle que soit la vitesse de rotation ω du moteur.

L'invention présente l'avantage que la mesure (comptage d'impulsions) est pratiquement insensible aux parasites et aux vibrations, l'épaisseur E de l'entrefer n'ayant que très peu d'influence sur l'amplitude des impulsions 14, et les variations étant de toute façon insuffisantes pour passer le seuil de détection de la sonde de Hall.

On remarquera en outre que le nombre de pièces à assembler peut être diminué par rapport au montage d'un joint dynamique de type "cassette" classique assurant les mêmes fonctions.

## Revendications

1. Joint dynamique de type "cassette", comportant un manchon (1) à collerette annulaire (2) propre à être calé en rotation sur un arbre tournant (3), et un support (4) de joint annulaire (5) entourant ledit manchon (1), ce joint (5) comportant une lèvre d'étanchéité circulaire (6) en appui étanche sur la surface extérieure dudit manchon (1), ce support (4) pouvant être ajusté de façon étanche dans un logement approprié d'une partie fixe (7), de sorte que ledit joint dynamique assure l'étanchéité entre ladite partie fixe (7) et ledit arbre tournant (3), **caractérisé en ce que** ladite collerette annulaire (2) est recouverte d'une couche d'un revêtement (8) en matière magnétisable portant au moins une piste (9) sur laquelle est inscrite une série de repères (10) polarisés alternativement en direction périphérique, cette piste (9) comportant au moins un repère singulier (11), et ledit support (4) de joint portant en regard de ladite piste (9) au moins un détecteur de champ magnétique (12), et **en ce que** ce détecteur est relié à un module électronique (17) de traitement du signal (14) du détecteur, et de mémorisation du déphasage angulaire (α) entre ledit repère singulier (11) et une position de référence souhaitée de l'arbre (3).

2. Joint selon la revendication 1, **caractérisé en ce que** ladite série de repères polarisés alternativement comporte des secteurs équiangulaires polarisés alternativement nord et sud (10) sur toute la périphérie de ladite piste, à l'exception d'un secteur neutre (11) constituant ledit repère singulier.

3. Joint selon la revendication 1 ou 2, **caractérisé en ce que** ledit revêtement en matière magnétisable (8) est de l'élastoferrite.

4. Joint selon l'une quelconque des revendications précédentes, **caractérisé en ce que** ledit détecteur de champ magnétique est constitué par une sonde (12) à effet Hall ou par une magnétorésistance.

5. Procédé pour la mise en oeuvre d'un joint conforme à l'une quelconque des revendications précédentes, **caractérisé en ce que** l'on monte ledit joint dans une position angulaire quelconque sur ledit arbre (3), on amène l'arbre (3) dans la position angulaire de référence souhaitée, on branche le détecteur de champ magnétique (12) sur son alimentation, ce qui fournit un signal de référence angulaire, on fait tourner l'arbre (3), et enfin on repère et l'on met en mémoire le déphasage angulaire (α) entre ledit repère singulier (11) et ladite position de référence souhaitée de l'arbre (3).

## Claims

1. A "cassette" type dynamic joint, comprising a sleeve (1) with an annular flange (2) suitable to be locked in rotation on a rotating shaft (3), and a support (4) for an annular joint (5) surrounding said sleeve (1), this joint (5) comprising a circular sealing lip (6) in sealed support on the outer surface of said sleeve (1), this support (4) being able to be adjusted in a sealed way in an appropriate housing of a fixed part (7), so that said dynamic joint provides the seal between said fixed part (7) and said rotating shaft (3), **characterized in that** said annular flange (2) is coated with a layer of a coating (8) in a magnetisable material carrying at least one track (9) on which is inscribed a series of reference markers (10) alternately polarized in a peripheral direction, this track (9) comprising at least one particular reference marker (11), and said joint support (4) carrying relative to said track (9) at least one magnetic field detector (12), and **in that** said detector is connected with an electronic module (17) for processing the signal (14) of the detector and storing the angular displacement (α) between said particular marker (11) and a required reference position of the shaft (3).

2. A joint according to claim 1, **characterized in that** said series of alternately polarized reference markers comprises alternately north and south polarized equiangular sectors (10) over the whole periphery of said track, except for a neutral sector (11) constituting said particular reference marker.

3. A joint according to claim 1 or 2, **characterized in that** said coating of magnetisable material (8) is elasto-ferrite.

4. A joint according to any one of the previous claims, **characterized in that** said magnetic field detector is constituted by a Hall probe (12) or by a magneto-resistance.

5. A process for the implementation of a joint according to any one of the previous claims, **characterized in that** said joint is assembled in any angular position on said shaft (3), the shaft (3) is brought into the required angular reference position, the magnetic field detector (12) is connected to its power supply, which provides an angular reference signal, the shaft (3)is rotated, and lastly the angular displacement (α) between said particular reference marker (11) and said required reference position of the shaft (3) is reference marked and stored.

## Patentansprüche

1. Dynamische Dichtung des Typs "Kassette", die eine Hülse (1) mit ringförmigem Kragen (2), die geeignet ist, drehbar auf einer drehenden Welle (3) angebracht zu werden, und eine Halterung (4) einer ringförmigen Dichtung (5), die diese Hülse (1) umgibt, umfasst, wobei die Dichtung (5) eine kreisförmige Dichtungslippe (6) aufweist, die sich in dichter Anlage an der Außenfläche der Hülse (1) befindet, wobei die Halterung (4) in einer geeigneten Aufnahme eines festen Teils (7) mit Dichtigkeit eingestellt werden kann, so dass diese dynamische Dichtung die Dichtigkeit zwischen dem festen Teil (7) und der drehenden Welle (3) gewährleistet,
**dadurch gekennzeichnet,**
**dass** dieser ringförmige Kragen (2) mit einer Beschichtung (8) aus magnetisierbarem Material überzogen ist, die mindestens eine Spur (9) trägt, auf der eine Reihe von abwechselnd polarisierten Markierungen entlang der Umfangslinie eingeschrieben sind, wobei diese Spur (9) mindestens eine singuläre Markierung (11) enthält, und wobei an der Dichtungshalterung (4) dieser Spur (9) gegenüber mindestens ein Magnetfelddetektor (12) sitzt, und dass dieser Detektor mit einem Elektronikmodul (17) zur Verarbeitung des Signals (14) des Detektors und zur Speicherung der Winkelphasenverschiebung (α) zwischen dieser singulären Markierung (11) und einer gewünschten Referenzstellung der Welle (3) verbunden ist.

2. Dichtung nach Anspruch 1,
**dadurch gekennzeichnet,**
**dass** diese Reihe abwechselnd polarisierter Markierungen über die gesamte Umfangslinie dieser Spur aus gleichwinkeligen, abwechselnd nord- und süd-polarisierten Sektoren (10) besteht, abgesehen von einem neutralen Sektor (11), der die genannte singuläre Markierung bildet.

3. Dichtung nach Anspruch 1 oder 2,
**dadurch gekennzeichnet,**
**dass** diese Beschichtung aus magnetisierbarem Material (8) aus Elastoferrit besteht.

4. Dichtung nach einem der vorherigen Ansprüche,
**dadurch gekennzeichnet,**
**dass** der genannte Magnetfelddetektor aus einer Hallsonde (12) oder einer Feldplatte besteht.

5. Verfahren zur Anwendung einer Dichtung gemäß einem der vorherigen Ansprüche,
**dadurch gekennzeichnet,**
**dass** diese Dichtung in einer beliebigen Winkelstellung auf der Welle (3) angebracht wird, die Welle (3) in die gewünschte Referenzstellung gebracht wird, der Magnetfelddetektor (12) an seine Stromversorgung angeschlossen wird, woraufhin ein Winkelreferenzsignal abgegeben wird, sodann die Welle (3) in Drehung versetzt wird und schließlich die Winkelphasenverschiebung (α) zwischen der singulären Markierung (11) und der gewünschten Referenzstellung der Welle (3) abgetastet und gespeichert wird.
